# EUROPEAN PATENT APPLICATION

(11) **EP 4 694 171 A1**
(43) Date of publication of application: **11.02.2026**
(21) Application number: 24796894.4
(22) Date of filing: 17.04.2024
(51) Int. Cl.: H04N 25/70

(54) **IMAGING DEVICE**

(30) Priority: 26.04.2023 JP 2023072197
(71) Applicant: Hamamatsu Photonics K.K., Hamamatsu-shi, Shizuoka 435-8558 (JP)
(72) Inventor: KYUSHIMA Ryuji, Hamamatsu-shi, Shizuoka 435-8558 (JP); FUJITA Kazuki, Hamamatsu-shi, Shizuoka 435-8558 (JP); SAWADA Junichi, Hamamatsu-shi, Shizuoka 435-8558 (JP); NAMBA Shuhei, Hamamatsu-shi, Shizuoka 435-8558 (JP); INUZUKA Yuya, Hamamatsu-shi, Shizuoka 435-8558 (JP)
(74) Representative: Hoffmann Eitle
(86) International application number: PCT/JP2024/015312
(87) International publication number: WO 2024/225141

(57) **Abstract**

This imaging device comprises: a plurality of drive power supply units that convert power supply voltage into driving direct-current voltage; and a gate driver that receives the driving direct-current voltage from the drive power supply units. One of the drive power supply units includes: a first voltage conversion portion that converts the power supply voltage into first direct-current voltage; a second voltage conversion portion that converts the first direct-current voltage into driving direct-current voltage; and a discharge circuit. The discharge circuit includes: a capacitive element that is charged using second direct-current voltage; and a second switch element that is driven by voltage across the capacitive element after the stop operation of the first voltage conversion portion is started, and that has one end connected to a first node between the second voltage conversion portion and the gate driver and has the other end connected to a reference potential line.

## Description

### Technical Field

The present disclosure relates to an imaging device. This application is based upon and claims the benefit of the priority from Japanese Patent Application No. 2023-072197, filed on April 26, 2023, the entire contents of which are incorporated herein by reference.

### Background Art

Patent Literature 1 discloses a radiation detector. The radiation detector generates an electrical signal of a radiation image corresponding to the radiation emitted from the radiation source. The radiation detector includes a light receiving panel, a transistor, a driver, and an interlock mechanism. The light receiving panel accumulates an amount of charges corresponding to the amount of radiation received. The transistor is provided corresponding to each pixel of the light receiving panel, and controls the output of the charge from each pixel of the light receiving panel. The driver generates a drive signal to control ON/OFF of each transistor. The interlock mechanism controls the ON/OFF sequence of a plurality of control voltages to be a preset sequence based on the states of the plurality of control voltages supplied to the driver to generate the drive signal.

### Citation List

### Patent Literature

Patent Literature 1: Japanese Unexamined Patent Application Publication No. 2009-300261

### Summary of Invention

### Technical Problem

The imaging device includes a plurality of light receiving regions for converting incident light or radiation into charges and a plurality of switch elements for reading out the charges accumulated in each of the plurality of light receiving regions. The operations of the plurality of switch elements are controlled by a driving circuit. A plurality of driving direct-current voltages (for example, 20 V, -10 V, and 5 V) generated from a common power supply voltage are supplied to the driving circuit.

When turning off the power supply of the imaging device, the sequence in which a plurality of driving direct-current voltages are turned off in a driving circuit may be specified. In one example, the sequence is specified such that the driving direct-current voltage of 20 V is turned off first, the driving direct-current voltage of -10 V is then turned off, and the driving direct-current voltage of 5 V is turned off finally. This is because if the driving direct-current voltage is not turned off in the specified sequence, an unintended circuit may be formed in the driving circuit to cause a phenomenon (latch-up) that an abnormal current continues to flow between the wiring for the driving direct-current voltage and the constant potential line (GND line), which may damage the driving circuit.

However, the driving direct-current voltage, which should turn off earlier than the other driving direct-current voltages, may not turn off earlier than the other driving direct-current voltages due to, for example, the influence of a capacitor for voltage stabilization. For example, in preparation for such a case, it is desirable to be able to arbitrarily set the timing at which at least one of the plurality of driving direct-current voltages turns off. It is an object of the present disclosure to provide an imaging device capable of arbitrarily setting the timing at which at least one of a plurality of driving direct-current voltages supplied to a driving circuit turns off.

### Solution to Problem

[1] An imaging device according to the present disclosure includes a plurality of pixels, a power supply line, a drive power supply unit, and a driving circuit. Each of the plurality of pixels has a light receiving region for converting incident light or radiation into an electrical signal. A power supply voltage is supplied through the power supply line. Each of the plurality of drive power supply units converts the power supply voltage into a driving direct-current voltage. The plurality of drive power supply units are connected in parallel to each other with respect to the power supply line. The driving circuit is supplied with the driving direct-current voltage from the drive power supply units and reads out the electrical signal from the light receiving region of each of the plurality of pixels. The magnitude of the driving direct-current voltage differs for each drive power supply unit. At least one of the plurality of drive power supply units includes a first voltage conversion portion for converting the power supply voltage into a first direct-current voltage, a second voltage conversion portion for converting the first direct-current voltage into the driving direct-current voltage, and a discharge circuit. The discharge circuit includes a capacitive element and a second switch element. The capacitive element is charged by the power supply voltage or another voltage whose voltage value is converted from the power supply voltage. The second switch element is driven by a voltage across the capacitive element after a stopping operation of the first voltage conversion portion is started. One end of the second switch element is connected to a first node between the second voltage conversion portion and the driving circuit. The other end of the second switch element is connected to a constant potential line.

In this imaging device, after light or radiation is incident on the light receiving regions of the plurality of pixels, an electrical signal is read out from the light receiving regions by the driving circuit. The driving circuit is supplied with a plurality of driving direct-current voltages whose voltage values are converted from the power supply voltage by the plurality of drive power supply units. At least one of the plurality of drive power supply units has a discharge circuit. The capacitive element of the discharge circuit is charged by the power supply voltage or another voltage whose voltage value is converted from the power supply voltage while the imaging device is performing the above-described operations. Then, when the power supply voltage is turned off, the stopping operation of the first voltage conversion portion is started, and the first direct-current voltage drops. When the first direct-current voltage drops, the second switch element is driven by the voltage across the capacitive element. As a result, the wiring for supplying the driving direct-current voltage to the driving circuit is connected to the constant potential line through the second switch element, and the charges accumulated in a capacitor for voltage stabilization or the like are discharged to the constant potential line through the second switch element. Therefore, in the drive power supply unit having a discharge circuit, the timing at which the driving direct-current voltage turns off is made earlier. Therefore, according to the imaging device of [1] above, it is possible to arbitrarily set the timing at which at least one driving direct-current voltage turns off, such as advancing the timing at which the driving direct-current voltage turns off in a specific drive power supply unit. In addition, since the drive power supply unit includes the second voltage conversion portion, the magnitude of the driving direct-current voltage can be set arbitrarily regardless of the magnitude of the voltage (first direct-current voltage) to control the drive timing of the second switch element.
[2] In the imaging device of [1] above, the first voltage conversion portion may include a switching regulator, and the second voltage conversion portion may include a linear regulator. In this case, the first voltage conversion portion can efficiently convert the power supply voltage into the first direct-current voltage, and the second voltage conversion portion can generate a low-noise driving direct-current voltage from the first direct-current voltage.
[3] In the imaging device of [2] above, the linear regulator may be a low dropout regulator. In this case, it is possible to reduce the power loss in the second voltage conversion portion by bringing the first direct-current voltage closer to the driving direct-current voltage.
[4] In the imaging device of any one of [1] to [3] above, the discharge circuit may include a first circuit portion. The first circuit portion applies a voltage based on the voltage across the capacitive element to the control terminal of the second switch element after the stopping operation of the first voltage conversion portion is started. The first circuit portion does not apply a voltage based on the voltage across the capacitive element to the control terminal of the second switch element before the start of the stopping operation of the first voltage conversion portion. By including such a first circuit portion in the discharge circuit, it is possible to automatically drive the second switch element when the stopping operation of the first voltage conversion portion is started.
[5] In the imaging device of any one of [1] to [4] above, the discharge circuit may further include a third switch element and a resistor. One end of the third switch element is connected to a second node between the capacitive element and the control terminal of the second switch element. The other end of the third switch element is connected to the constant potential line. The third switch element is driven by the first direct-current voltage. The resistor is interposed between the second node and the control terminal of the second switch element. By including such a third switch element and a resistor in the discharge circuit, it is possible to automatically drive the second switch element when the stopping operation of the first voltage conversion portion is started.
[6] In the imaging device of any one of [1] to [5] above, the at least one drive power supply unit may further include a third voltage conversion portion. Then, the another voltage may be a voltage converted from a power supply voltage by the third voltage conversion portion. In this case, the degree of freedom in the magnitude of the voltage for charging the capacitive element can be increased. In addition, compared to the case where a diode is provided between the power supply line and the capacitive element, for example, there is an advantage that the capacitive element can be charged even with a negative voltage. In addition, when a regulator is used in another circuit, the circuit scale can be reduced by using the regulator as the third voltage conversion portion.
[7] In the imaging device of any one of [1] to [6] above, the first voltage conversion portion may have an enable terminal for controlling ON/OFF of an operation of the first voltage conversion portion, separately from a terminal for inputting the power supply voltage. Then, a voltage obtained by dividing the power supply voltage may be input to the enable terminal. In this case, the first direct-current voltage can be turned off earlier when the power supply voltage is turned off. As a result, the timing at which the driving direct-current voltage turns off can be made earlier.
[8] In the imaging device of any one of [1] to [5] above, the another voltage may be the driving direct-current voltage. In this case, since there is no need to provide a separate voltage conversion portion for generating the another voltage, the circuit scale can be reduced.
[9] In the imaging device of [8] above, the discharge circuit may further include a backflow prevention circuit that is interposed between the capacitive element and a third node between the second voltage conversion portion and the driving circuit to prevent a backflow of charges from the capacitive element to the third node. In this case, the voltage across the capacitive element can be maintained for a time sufficient for the driving direct-current voltage to turn off.
[10] In the imaging device of [8] or [9] above, the discharge circuit may further include a third switch element and a resistor. One end of the third switch element is connected to a second node between the capacitive element and a control terminal of the second switch element. The other end of the third switch element is connected to the constant potential line. The resistor is interposed between the second node and the control terminal of the second switch element. The third switch element is driven by a voltage obtained by dividing the first direct-current voltage. By including such a third switch element and a resistor in the discharge circuit, the second switch element can be automatically driven when the stopping operation of the first voltage conversion portion is started. In addition, since the third switch element is driven by a voltage obtained by dividing the first direct-current voltage, it is possible to make the timing at which the third switch element is turned off earlier when the first direct-current voltage drops, and accordingly, it is possible to make the driving start timing of the second switch element earlier.
[11] Another imaging device according to the present disclosure includes a plurality of pixels, a power supply line, a drive power supply unit, and a driving circuit. Each of the plurality of pixels has a light receiving region for converting incident light or radiation into an electrical signal. A power supply voltage is supplied through the power supply line. Each of the plurality of drive power supply units converts the power supply voltage into a driving direct-current voltage. The plurality of drive power supply units are connected in parallel to each other to the power supply line. The driving circuit is supplied with the driving direct-current voltage from the plurality of drive power supply units and reads out the electrical signal from the light receiving region of each of the plurality of pixels. The magnitude of the driving direct-current voltage differs for each drive power supply unit. At least one of the plurality of drive power supply units includes a voltage conversion portion for converting the power supply voltage into a driving direct-current voltage and a discharge circuit. The discharge circuit includes a capacitive element and a second switch element. The capacitive element is charged by the power supply voltage or another voltage whose voltage value is converted from the power supply voltage. The second switch element is driven by a voltage across the capacitive element after a stopping operation of the voltage conversion portion is started. One end of the second switch element is connected to a first node between the voltage conversion portion and the driving circuit. The other end of the second switch element is connected to a constant potential line.

In this imaging device, after light or radiation is incident on the light receiving regions of the plurality of pixels, an electrical signal is read out from the light receiving regions by the driving circuit. The driving circuit is supplied with a plurality of driving direct-current voltages converted from the power supply voltage by the plurality of drive power supply units. At least one of the plurality of drive power supply units has a discharge circuit. The capacitive element of the discharge circuit is charged by the power supply voltage or another voltage converted from the power supply voltage while the imaging device is performing the above-described operations. Then, when the power supply voltage is turned off, the stopping operation of the voltage conversion portion is started, and the driving direct-current voltage drops. When the driving direct-current voltage drops, the second switch element is driven by the voltage across the capacitive element. As a result, the wiring for supplying the driving direct-current voltage to the driving circuit is connected to the constant potential line through the second switch element, and the charges accumulated in a capacitor for voltage stabilization or the like are discharged to the constant potential line through the second switch element. Therefore, in the drive power supply unit having a discharge circuit, the timing at which the driving direct-current voltage turns off is made earlier. Therefore, according to the imaging device of [11] above, it is possible to arbitrarily set the timing at which at least one driving direct-current voltage turns off, such as advancing the timing at which the driving direct-current voltage turns off in a specific drive power supply unit.
[12] In the imaging device of any one of [1] to [11] above, when the power supply voltage turns off, the driving direct-current voltage of the at least one drive power supply unit may turn off earlier than the driving direct-current voltages of the other drive power supply units among the plurality of drive power supply units. Thus, according to any one of the imaging devices described above, it is possible to easily set the sequence in which a plurality of driving direct-current voltages turn off.
[13] In the imaging device of any one of [1] to [12] above, when the power supply voltage turns off, the driving direct-current voltage of the at least one drive power supply unit may turn off earlier than at least one driving direct-current voltage equal to or lower than the driving direct-current voltage of the at least one drive power supply unit. Thus, since the high driving direct-current voltage turns off earlier, the driving direct-current voltage in the subsequent stage can also turn off earlier.
[14] In the imaging device of any one of [1] to [13] above, at least two of the plurality of drive power supply units may have the discharge circuit. In this case, since it is possible to make the timing at which the driving direct-current voltage turns off earlier in at least two drive power supply units, it is possible to easily set the timing at which at least one driving direct-current voltage turns off.
[15] In the imaging device of any one of [1] to [14] above, at least one of the plurality of drive power supply units may not have the discharge circuit. A drive power supply unit for which the timing at which the driving direct-current voltage turns off may be delayed can have a simplified circuit configuration by not having the discharge circuit.
[16] In the imaging device of any one of [1] to [15] above, each of the plurality of pixels may further have a first switch element having one end connected to the light receiving region and the other end connected to a charge readout wiring, and the driving circuit may drive the first switch elements of the plurality of pixels. In this case, it is possible to appropriately set the sequence in which a plurality of driving direct-current voltages supplied to the circuit for driving the first switch element turn off. Therefore, it is possible to prevent charges from remaining in the light receiving regions of the plurality of pixels after the power supply voltage is turned off.
[17] In the imaging device of [16] above, the first switch element may be a transistor mainly containing IGZO or amorphous silicon, and the driving circuit may drive the first switch element by providing a drive voltage to a control terminal of the transistor. When a transistor mainly contains IGZO or amorphous silicon, the resistance of the transistor is large. Therefore, if the sequence in which a plurality of driving direct-current voltages turn off is different from the specified sequence, charges may remain in the gate terminal. According to the imaging device of [15] above, even if the transistor mainly contains IGZO or amorphous silicon, it is easy to set the sequence in which the plurality of driving direct-current voltages turn off as specified. Therefore, it is possible to reduce the amount of charges remaining in the gate terminal. In addition, since the discharge circuit discharges the charges remaining in the gate terminal of the transistor, it is possible to effectively make the timing at which the driving direct-current voltage turns off earlier.

### Advantageous Effects of Invention

According to the present disclosure, it is possible to provide an imaging device capable of arbitrarily setting the timing at which at least one of a plurality of driving direct-current voltages supplied to a driving circuit turns off.

### Brief Description of Drawings

[FIG. 1] FIG. 1 is a diagram schematically showing the configuration of an imaging device according to a first embodiment of the present disclosure.
[FIG. 2] FIG. 2 is a block diagram showing a circuit configuration for supplying a plurality of driving direct-current voltages to a driving circuit.
[FIG. 3] FIG. 3 is a diagram showing the circuit configuration of a drive power supply unit.
[FIG. 4] FIG. 4 is a diagram showing the circuit configuration of a drive power supply unit according to a modification.
[FIG. 5] FIG. 5 is a diagram showing the circuit configuration of a drive power supply unit according to a modification.
[FIG. 6] FIG. 6 is a graph showing the time waveforms of a driving direct-current voltage and the time waveform of a power supply voltage.
[FIG. 7] FIG. 7 is a diagram showing the circuit configuration of a drive power supply unit according to a second embodiment.
[FIG. 8] FIG. 8 is a diagram showing the circuit configuration of a drive power supply unit according to a modification.
[FIG. 9] FIG. 9 is a diagram showing the circuit configuration of a drive power supply unit according to a modification.
[FIG. 10] FIG. 10 is a graph showing the time waveforms of a driving direct-current voltage and the time waveforms of a power supply voltage.

### Description of Embodiments

Hereinafter, embodiments of an imaging device according to the present disclosure will be described in detail with reference to the accompanying drawings. In the description of the drawings, the same elements are denoted by the same reference numerals, and the repeated description thereof will be omitted.

### [First embodiment]

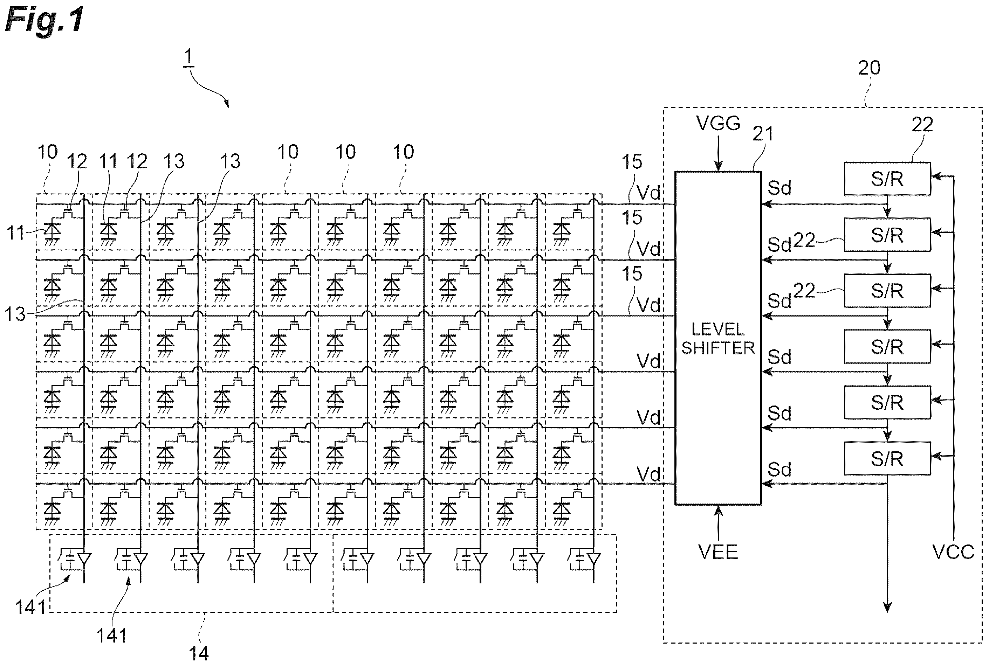

FIG. 1 is a diagram schematically showing the configuration of an imaging device 1 according to a first embodiment of the present disclosure. As shown in FIG. 1, the imaging device 1 according to the present embodiment includes a plurality of pixels 10, a plurality of charge readout wirings 13, a readout circuit 14, a plurality of gate wirings 15, and a gate driver 20 (driving circuit).

The plurality of pixels 10 are arranged two-dimensionally across a plurality of rows and a plurality of columns. Each of the plurality of pixels 10 has a light receiving region 11 and a first switch element 12. The light receiving region **11** converts incident light or radiation into an electrical signal (charge). The light receiving region **11** is formed of a semiconductor such as a direct conversion material, for example, silicon, a-Si, or CdTe. The first switch element 12 is, for example, a transistor. One end of the first switch element 12 (for example, one current terminal of a transistor) is connected to the light receiving region 11. One current terminal is either a drain or a source. When the first switch element 12 is a transistor, the semiconductor forming the transistor mainly contains IGZO, which is composed of indium (In), gallium (Ga), zinc (Zn), and oxygen (O), or amorphous silicon. The first switch element 12 is, for example, a thin film transistor.

The charge readout wiring 13 is a conductor provided for each column of the plurality of pixels 10. Each charge readout wiring 13 is connected to the other end (for example, the other current terminal of the transistor) of the first switch element 12 in the corresponding column. The other current terminal is either a source or a drain. The charge readout wiring 13 reads out charges from the light receiving region 11 in the corresponding column through the first switch element 12.

The readout circuit 14 is a circuit portion that reads out electrical signals from the light receiving regions 11 of the plurality of pixels 10. The readout circuit 14 has a plurality of amplifier circuits 141. The amplifier circuit 141 is provided for each column of the plurality of pixels 10. The amplifier circuit 141 is connected to an end of the charge readout wiring 13 in the corresponding column, and generates a voltage signal according to the amount of charges received through the charge readout wiring 13. The amplifier circuit 141 is, for example, a charge amplifier. The readout circuit 14 sequentially outputs the voltage signals output from the plurality of amplifier circuits 141 to the outside of the imaging device 1.

The gate wiring 15 is a conductor provided for each row of the plurality of pixels 10. Each gate wiring 15 is connected to a control terminal (for example, a gate of a transistor) of the first switch element 12 in the corresponding row. One end of the gate wiring 15 is connected to the gate driver 20. A drive voltage Vd for driving (turning on) the first switch element 12 in the corresponding row is supplied from the gate driver 20 to each gate wiring 15. The drive voltage Vd is a binary signal having a high level of 20 V and a low level of -10 V, for example. The drive voltage Vd is sequentially set to a high level for each gate wiring 15.

The gate driver 20 is a circuit portion that reads out electrical signals from the light receiving regions 11 of the plurality of pixels 10. The gate driver 20 provides the drive voltage Vd to the plurality of gate wirings 15 to drive the first switch elements 12 of the plurality of pixels 10. The gate driver 20 has a level shifter 21 and a plurality of shift registers 22. The shift register 22 is provided for each row, and a plurality of shift registers 22 are connected in series with each other. Each shift register 22 outputs a drive signal Sd for a corresponding row. The drive signal Sd is a binary signal having a high level of 5 V and a low level of 0 V (reference potential), for example. The plurality of shift registers 22 receive a driving direct-current voltage VCC (for example, 5 V) as a power supply voltage, and are operated by the driving direct-current voltage VCC. The magnitude of the driving direct-current voltage VCC is constant over time.

The level shifter 21 receives the drive signals Sd from the plurality of shift registers 22, and converts the drive signals Sd into drive voltages Vd. The level shifter 21 receives a driving direct-current voltage VGG (for example, 20 V) having a different magnitude from the driving direct-current voltage VCC and a driving direct-current voltage VEE (for example, -10 V) having a different magnitude from the driving direct-current voltages VCC and VGG, as power supply voltages, and is operated by the driving direct-current voltages VGG and VEE. The magnitudes of the driving direct-current voltages VGG and VEE are constant over time.

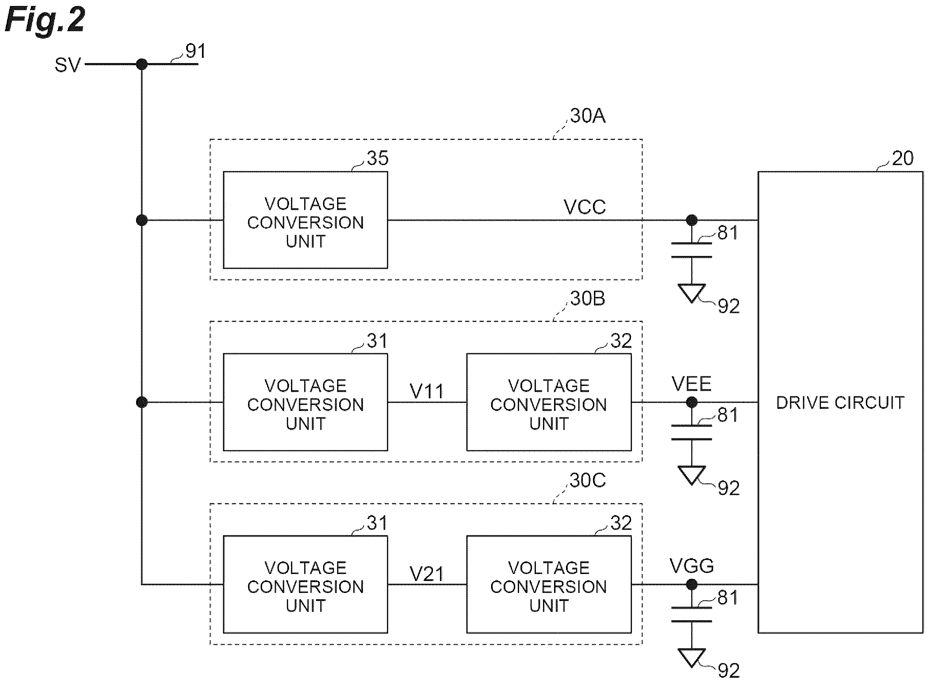

FIG. 2 is a block diagram showing a circuit configuration for supplying the driving direct-current voltages VCC, VGG, and VEE to the gate driver 20. In addition to the configuration described above, the imaging device 1 further includes a power supply line 91, a drive power supply unit 30A, a drive power supply unit 30B, and a drive power supply unit 30C. The power supply line 91 supplies a power supply voltage SV input from the outside of the imaging device 1. The power supply voltage SV is, for example, 24 V. The drive power supply units 30A, 30B, and 30C are connected in parallel to each other with respect to the power supply line 91.

The drive power supply unit 30A converts the power supply voltage SV into the driving direct-current voltage VCC, and supplies the driving direct-current voltage VCC to the gate driver 20. The drive power supply unit 30A has a voltage conversion portion 35. The voltage conversion portion 35 includes, for example, a switching regulator, and converts the power supply voltage SV into the driving direct-current voltage VCC with high efficiency.

The drive power supply unit 30B converts the power supply voltage SV into a driving direct-current voltage VEE, and supplies the driving direct-current voltage VEE to the gate driver 20. The drive power supply unit 30B has a first voltage conversion portion 31 and a second voltage conversion portion 32. The first voltage conversion portion 31 of the drive power supply unit 30B includes, for example, a switching regulator, and converts the power supply voltage SV into the first direct-current voltage V11 with high efficiency. The magnitude of the first direct-current voltage V11 is constant over time. The absolute value of the first direct-current voltage V11 is smaller than the absolute value of the power supply voltage SV and is larger than the absolute value of the driving direct-current voltage VEE. The first direct-current voltage V11 is, for example, -12 V. The second voltage conversion portion 32 of the drive power supply unit 30B includes, for example, a linear regulator, and converts the first direct-current voltage V11 into the driving direct-current voltage VEE with low noise. In one practical example, the second voltage conversion portion 32 of the drive power supply unit 30B is a low dropout regulator (LDO).

The drive power supply unit 30C converts the power supply voltage SV into the driving direct-current voltage VGG, and supplies the driving direct-current voltage VGG to the gate driver 20. The drive power supply unit 30C has a first voltage conversion portion 31 and a second voltage conversion portion 32. The first voltage conversion portion 31 of the drive power supply unit 30C includes, for example, a switching regulator, and converts the power supply voltage SV into a first direct-current voltage V21 with high efficiency. The magnitude of the first direct-current voltage V21 is constant over time. The absolute value of the first direct-current voltage V21 is smaller than the absolute value of the power supply voltage SV and is larger than the absolute value of the driving direct-current voltage VGG. The first direct-current voltage V21 is, for example, 22 V. The second voltage conversion portion 32 of the drive power supply unit 30C includes, for example, a linear regulator, and converts the first direct-current voltage V21 into the driving direct-current voltage VGG with low noise. In one practical example, the second voltage conversion portion 32 of the drive power supply unit 30C is an LDO.

A bypass capacitor 81 for voltage stabilization is connected between a node between the drive power supply unit 30A and the gate driver 20 and a reference potential line 92 (constant potential line). Similarly, the bypass capacitor 81 is provided in the drive power supply units 30B and 30C. The potential of the reference potential line 92 is, for example, 0 V.

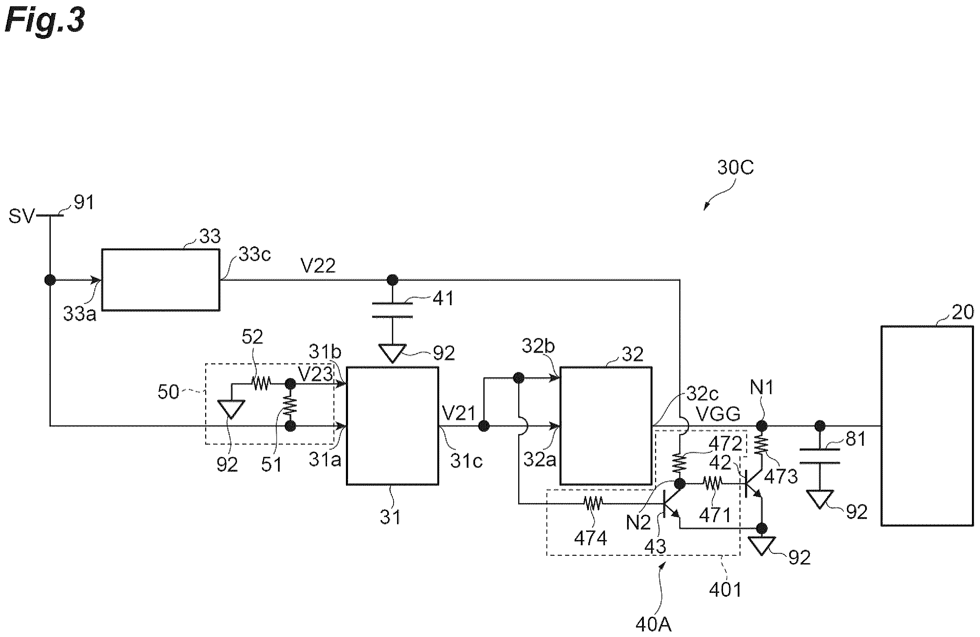

FIG. 3 is a diagram showing the circuit configuration of the drive power supply unit 30C. As shown in FIG. 3, the drive power supply unit 30C has a third voltage conversion portion 33, a discharge circuit 40A, and a voltage divider circuit 50 in addition to the first voltage conversion portion 31 and the second voltage conversion portion 32. The drive power supply units 30A and 30B shown in FIG. 2 do not include the third voltage conversion portion 33 and the discharge circuit 40A. The drive power supply units 30A and 30B may each include the voltage divider circuit 50.

Referring to FIG. 3, the first voltage conversion portion 31 has a voltage input terminal 31a, an enable terminal 31b, and a voltage output terminal 31c. Similarly, the second voltage conversion portion 32 has a voltage input terminal 32a, an enable terminal 32b, and a voltage output terminal 32c. The voltage input terminal 31a of the first voltage conversion portion 31 is connected to the power supply line 91 and receives the power supply voltage SV from the power supply line 91. The voltage output terminal 31c of the first voltage conversion portion 31 is connected to the voltage input terminal 32a of the second voltage conversion portion 32. The first direct-current voltage V21 output from the voltage output terminal 31c is input to the voltage input terminal 32a. The voltage output terminal 32c of the second voltage conversion portion 32 is connected to the gate driver 20, and outputs the driving direct-current voltage VGG to the gate driver 20. The enable terminal 31b of the first voltage conversion portion 31 is a terminal that is provided separately from the voltage input terminal 31a and the voltage output terminal 31c to control ON/OFF of the operation of the first voltage conversion portion 31. Similarly, the enable terminal 32b of the second voltage conversion portion 32 is a terminal that is provided separately from the voltage input terminal 32a and the voltage output terminal 32c to control ON/OFF of the operation of the second voltage conversion portion 32.

The voltage divider circuit 50 divides the power supply voltage SV to generate a control voltage V23. Specifically, the voltage divider circuit 50 has a resistor 51 and a resistor 52 that are connected in series between the power supply line 91 and the reference potential line 92. At a node between the resistor 51 and the resistor 52, the control voltage V23 divided according to the ratio of the resistance values of the resistor 51 and the resistor 52 is generated. The node between the resistor 51 and the resistor 52 is connected to the enable terminal 31b of the first voltage conversion portion 31, and the control voltage V23 is input to the enable terminal 31b. The enable terminal 32b of the second voltage conversion portion 32 is connected to the voltage output terminal 31c of the first voltage conversion portion 31.

The third voltage conversion portion 33 has a voltage input terminal 33a and a voltage output terminal 33c. The voltage input terminal 33a is connected to the power supply line 91. The power supply voltage SV is input from the power supply line 91 to the voltage input terminal 33a. The third voltage conversion portion 33 includes, for example, a switching regulator, and converts the power supply voltage SV into a second direct-current voltage V22 with high efficiency. The magnitude of the second direct-current voltage V22 is constant over time. The absolute value of the second direct-current voltage V22 is smaller than the absolute value of the driving direct-current voltage VGG. The second direct-current voltage V22 is, for example, 5 V. The second direct-current voltage V22 is output from the voltage output terminal 33c.

The discharge circuit 40A is provided to discharge the charges accumulated in the bypass capacitor 81 and the like to the reference potential line 92 when the driving direct-current voltage VGG is turned off due to, for example, the end of the operation of the imaging device 1. Since the drive power supply unit 30C has the discharge circuit 40A, when the power supply voltage SV is turned off, for example, when the imaging device 1 ends its operation, the driving direct-current voltage VGG turns off earlier than the driving direct-current voltages VCC and VEE. The discharge circuit 40A in the present embodiment has a capacitive element 41, a second switch element 42, a resistor 473, and a first circuit portion 401.

The capacitive element 41 is configured to be charged by the power supply voltage SV or another voltage converted from the power supply voltage SV. In one example, the capacitive element 41 is configured to be charged by the second direct-current voltage V22 output from the third voltage conversion portion 33. Specifically, one electrode of the capacitive element 41 is connected to the voltage output terminal 33c of the third voltage conversion portion 33. The other electrode of the capacitive element 41 is connected to the reference potential line 92. The capacitance value of the capacitive element 41 is in the range of 1 mF to 50 mF, for example. The type of the capacitive element 41 is, for example, an electric double layer capacitor or a tantalum capacitor. When the capacitive element 41 is charged by the power supply voltage SV, the discharge circuit 40A may not include the third voltage conversion portion 33.

The second switch element 42 is, for example, a transistor. In the shown example, the second switch element 42 is an NPN transistor. One end of the second switch element 42 (one current terminal when the second switch element 42 is a transistor) is connected to a first node N1 between the second voltage conversion portion 32 and the gate driver 20 through the resistor 473. The other end of the second switch element 42 (the other current terminal when the second switch element 42 is a transistor) is connected to the reference potential line 92. The control terminal of the second switch element 42 is connected to the voltage output terminal 33c of the third voltage conversion portion 33 through resistors 471 and 472. The resistors 471 and 472 are connected in series with each other between the control terminal of the second switch element 42 and the voltage output terminal 33c of the third voltage conversion portion 33.

The first circuit portion 401 is configured to apply a voltage based on the voltage across the capacitive element 41 to the control terminal of the second switch element 42 after the stopping operation of the first voltage conversion portion 31 is started. The voltage based on the voltage across the capacitive element 41 also includes the voltage across the capacitive element 41 itself. The first circuit portion 401 is configured not to apply a voltage based on the voltage across the capacitive element 41 to the control terminal of the second switch element 42 while the first voltage conversion portion 31 is operating, that is, before start of the stopping operation of the first voltage conversion portion 31.

Specifically, the first circuit portion 401 includes a third switch element 43 and resistors 471, 472, and 474. The third switch element 43 is, for example, a transistor. In the shown example, the third switch element 43 is an NPN transistor. One end of the third switch element 43 (one current terminal when the third switch element 43 is a transistor) is connected to a second node N2 between one electrode of the capacitive element 41 and the control terminal of the second switch element 42 (for example, between the resistors 471 and 472). When the second node N2 is a node between the resistor 471 and the resistor 472, the resistor 471 is interposed between the second node N2 and the control terminal of the second switch element 42. The other end of the third switch element 43 (the other current terminal when the third switch element 43 is a transistor) is connected to the reference potential line 92. The control terminal of the third switch element 43 is connected to the voltage output terminal 31c of the first voltage conversion portion 31 through the resistor 474. Therefore, while the first voltage conversion portion 31 is operating, the third switch element 43 is driven by a voltage (which may be the first direct-current voltage V21 itself) based on the first direct-current voltage V21, so that one end and the other end of the third switch element 43 become a conductive state. As a result, the potential of the second node N2 approaches the potential of the reference potential line 92, and the voltage based on the voltage across the capacitive element 41 is not applied to the control terminal of the second switch element 42.

On the other hand, when the first direct-current voltage V21 drops, the third switch element 43 is no longer driven, so that the one end and the other end of the third switch element 43 become non-conductive state. At this time, the second direct-current voltage V22 also drops, so that the potential of the second node N2 approaches the potential of the voltage across the capacitive element 41. Therefore, a voltage based on the voltage across the capacitive element 41 is applied to the control terminal of the second switch element 42. As a result, the second switch element 42 is driven by the voltage across the capacitive element 41 after the stopping operation of the first voltage conversion portion 31 is started.

The operation and effects of the imaging device 1 having the above configuration will be described. In this imaging device 1, when light or radiation is incident on the light receiving regions 11 of a plurality of pixels 10, charges are accumulated in the light receiving regions 11. The charges are read out to the charge readout wiring 13 through the first switch element 12 controlled by the gate driver 20. The driving direct-current voltages VCC, VEE, and VGG converted from the power supply voltage SV by the drive power supply units 30A, 30B, and 30C, respectively, are supplied to the gate driver 20.

In the drive power supply unit 30C, while the power supply voltage SV is being supplied from the power supply line 91, the first direct-current voltage V21 is output from the first voltage conversion portion 31, and the second direct-current voltage V22 is output from the third voltage conversion portion 33. During that time, the capacitive element 41 is charged by the second direct-current voltage V22 (or optionally, the power supply voltage SV). In addition, the driving direct-current voltage VGG is output from the second voltage conversion portion 32, and the driving direct-current voltage VGG is supplied to the level shifter 21 of the gate driver 20 (see FIG. 1). At this time, as described above, in the first circuit portion 401, the third switch element 43 is driven by the voltage based on the first direct-current voltage V21, so that the potential of the second node N2 approaches the potential of the reference potential line 92 and the second switch element 42 is not driven.

Thereafter, when the power supply voltage SV is turned off due to, for example, the end of the operation of the imaging device 1, the stopping operations of the first voltage conversion portion 31 and the third voltage conversion portion 33 are started, and the first direct-current voltage V21 and the second direct-current voltage V22 drop. Then, as the first direct-current voltage V21 drops, the stopping operation of the second voltage conversion portion 32 starts. At this time, as described above, in the first circuit portion 401, the third switch element 43 is no longer driven, so that the potential of the second node N2 approaches the potential determined by the voltage across the capacitive element 41. Therefore, the second switch element 42 is driven by the voltage across the capacitive element 41.

When the second switch element 42 is driven, the first node N1 of the wiring for supplying the driving direct-current voltage VGG to the gate driver 20 is connected to the reference potential line 92 through the second switch element 42. At this time, charges accumulated on the wiring for supplying the driving direct-current voltage VGG to the gate driver 20, such as charges accumulated in the bypass capacitor 81 and charges accumulated in the circuit element of the gate driver 20, are discharged to the reference potential line 92. Therefore, in the drive power supply unit 30C having the discharge circuit 40A, the timing at which the driving direct-current voltage turns off is earlier than that in the other drive power supply units 30A and 30B that do not have the discharge circuit 40A. Therefore, according to the imaging device 1 according to the present embodiment, it is possible to arbitrarily set the timing at which the driving direct-current voltage VGG turns off, such as advancing the timing at which the driving direct-current voltage VGG turns off in a specific drive power supply unit 30C.

As described above, the first voltage conversion portion 31 may include a switching regulator, and the second voltage conversion portion 32 may include a linear regulator. In this case, the first voltage conversion portion 31 can efficiently convert the power supply voltage SV into the first direct-current voltages V11 and V21, and the second voltage conversion portion 32 can generate the driving direct-current voltages VEE and VGG with low noise from the first direct-current voltages V11 and V21.

As described above, the linear regulator may be a low dropout regulator. In this case, it is possible to reduce the power loss in the second voltage conversion portion 32 by bringing the first direct-current voltages V11 and V21 closer to the driving direct-current voltages VEE and VGG.

As described above, the discharge circuit 40A may include the first circuit portion 401. The first circuit portion 401 applies a voltage based on the voltage across the capacitive element 41 to the control terminal of the second switch element 42 after the stopping operation of the first voltage conversion portion 31 is started. The first circuit portion 401 does not apply the voltage based on the voltage across the capacitive element 41 to the control terminal of the second switch element 42 while the first voltage conversion portion 31 is operating, that is, before start of the stopping operation of the first voltage conversion portion 31. By including such a first circuit portion 401 in the discharge circuit 40A, it is possible to automatically drive the second switch element 42 when the stopping operation of the first voltage conversion portion 31 is started.

As described above, the discharge circuit 40A may further include the third switch element 43 and the resistor 471. One end of the third switch element 43 is connected to the second node N2 between the capacitive element 41 and the control terminal of the second switch element 42. The other end of the third switch element 43 is connected to the reference potential line 92. The third switch element 43 is driven by a voltage based on the first direct-current voltage V21 (the first direct-current voltage V21 itself in the present embodiment). The resistor 471 is interposed between the second node N2 and the control terminal of the second switch element 42. By including such a third switch element 43 and resistor 471 in the discharge circuit 40A, it is possible to automatically drive the second switch element 42 when the stopping operation of the first voltage conversion portion 31 is started. At that time, the resistor 471 prevents a current from flowing to the control terminal of the second switch element 42 when the third switch element 43 is driven to be turned on. The other resistors 472, 473, and 474 limit the magnitude of the current to protect the third switch element 43. The third switch element 43 may be driven by the power supply voltage SV or a voltage based on the power supply voltage SV, instead of the voltage based on the first direct-current voltage V21. Even in this case, the same effects as those described above can be obtained.

As described above, the drive power supply unit 30C may include the third voltage conversion portion 33. Then, the voltage for charging the capacitive element 41 may be the second direct-current voltage V22 converted from the power supply voltage SV by the third voltage conversion portion 33. In this case, the degree of freedom in the magnitude of the voltage for charging the capacitive element 41 can be increased.

As described above, the first voltage conversion portion 31 may have an enable terminal 31b for controlling ON/OFF of the operation of the first voltage conversion portion 31, in addition to the voltage input terminal 31a for inputting the power supply voltage SV. Then, the control voltage V23 obtained by dividing the power supply voltage SV may be input to the enable terminal 31b. In this case, when the power supply voltage SV is turned off, the stopping operation of the first voltage conversion portion 31 can be started earlier, and accordingly, the first direct-current voltage V21 can drop earlier. As a result, the timing at which the driving direct-current voltage VGG turns off can be made earlier. In addition, in the present embodiment, the control voltage obtained by dividing the power supply voltage SV is not input to the third voltage conversion portion 33. Therefore, the timing at which the second direct-current voltage V22 drops is later than the timing at which the first direct-current voltage V21 drops. Therefore, for a while after the first direct-current voltage V21 drops, the third switch element 43 can be driven by the second direct-current voltage V22, and the capacitance value of the capacitive element 41 can be reduced.

As in the present embodiment, a plurality of pixels 10 may have the first switch elements 12 each having one end connected to the light receiving region 11 and the other end connected to the charge readout wiring 13, and the gate driver 20 may drive the first switch elements 12 of the plurality of pixels 10. In this case, it is possible to appropriately set the sequence in which a plurality of driving direct-current voltages VCC, VEE, and VGG supplied to the circuit (gate driver 20) for driving the first switch element 12 turn off. Therefore, it is possible to prevent charges from remaining in the light receiving regions 11 of the plurality of pixels 10 after the power supply voltage SV is turned off.

As described above, the first switch element 12 is a transistor mainly containing IGZO or amorphous silicon, and the gate driver 20 may drive the first switch element 12 by providing the drive voltage Vd to the control terminal of the transistor. When a transistor mainly contains IGZO or amorphous silicon, the resistance of the transistor is large. Therefore, if the sequence in which a plurality of driving direct-current voltages VCC, VEE, and VGG turn off is different from the specified sequence, charges remain in the gate terminal. According to the imaging device 1 according to the present embodiment, even if the transistor serving as the first switch element 12 mainly contains IGZO or amorphous silicon, it is easy to set the sequence in which the driving direct-current voltages VCC, VEE, and VGG turn off as specified. Therefore, it is possible to reduce the amount of charges remaining in the gate terminal. In addition, since the discharge circuit 40A of the drive power supply unit 30C discharges the charges remaining in the gate terminal of the transistor, it is possible to effectively make the timing at which the driving direct-current voltage VGG turns off earlier.

As described above, when the power supply voltage SV is turned off, the driving direct-current voltage VGG of the drive power supply unit 30C may turn off earlier than the driving direct-current voltages VCC and VEE of the other drive power supply units 30A and 30B. Therefore, it is possible to easily set the sequence in which the driving direct-current voltage VGG turns off relative to the driving direct-current voltages VCC and VEE. As in the present embodiment, when the power supply voltage SV is turned off, the driving direct-current voltage VGG of the drive power supply unit 30C may turn off earlier than the driving direct-current voltages VCC and VEE having voltages equal to or lower than the driving direct-current voltage VGG.

As described above, at least one of the drive power supply units 30A, 30B, and 30C (drive power supply units 30A and 30B in the present embodiment) may not include the discharge circuit 40A. A drive power supply unit for which the timing at which the driving direct-current voltage turns off may be delayed can have a simplified circuit configuration by not having the discharge circuit 40A.

### [First modification]

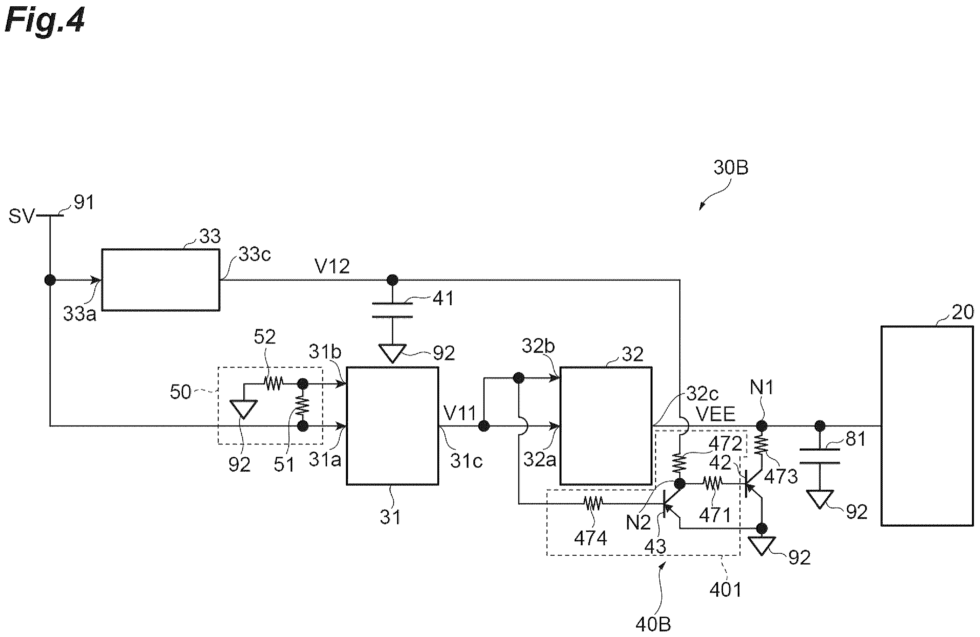

In the first embodiment, only the drive power supply unit 30C has the discharge circuit 40A, but the drive power supply unit 30B may also have a discharge circuit. FIG. 4 is a diagram showing the circuit configuration of the drive power supply unit 30B in such a case. The drive power supply unit 30B has a discharge circuit 40B.

The driving direct-current voltage VEE output from the drive power supply unit 30B is a negative voltage (for example, -10 V). Therefore, a second direct-current voltage V12 output from the third voltage conversion portion 33 of the drive power supply unit 30B is also a negative voltage. The magnitude of the second direct-current voltage V12 is constant over time. The absolute value of the second direct-current voltage V12 is smaller than the absolute value of the driving direct-current voltage VEE. The second direct-current voltage V12 is, for example, -5 V. In the present modification, the capacitive element 41 is charged by the second direct-current voltage V12.

In the discharge circuit 40B, when the second switch element 42 and the third switch element 43 are transistors, these transistors are PNP transistors, unlike the discharge circuit 40A of the drive power supply unit 30C, because the first direct-current voltage V11 and the driving direct-current voltage VEE are negative voltages. Except for the type of transistor, the configuration of the discharge circuit 40B is the same as the configuration of the discharge circuit 40A.

In the first embodiment, only one (drive power supply unit 30C) of the drive power supply units 30A, 30B, and 30C has the discharge circuit 40A. As in the present modification, at least two (for example, the drive power supply units 30B and 30C) of the drive power supply units 30A, 30B, and 30C may have a discharge circuit. In this case, since the timing at which the driving direct-current voltage turns off in at least two drive power supply units is made earlier, the timing at which at least two driving direct-current voltages (for example, the driving direct-current voltages VEE and VGG) turn off can be easily set.

Depending on the circuit configuration of the gate driver 20, a negative driving direct-current voltage may be specified so as to turn off the earliest. In this case, only the drive power supply unit that outputs a negative driving direct-current voltage may have a discharge circuit.

### [Second modification]

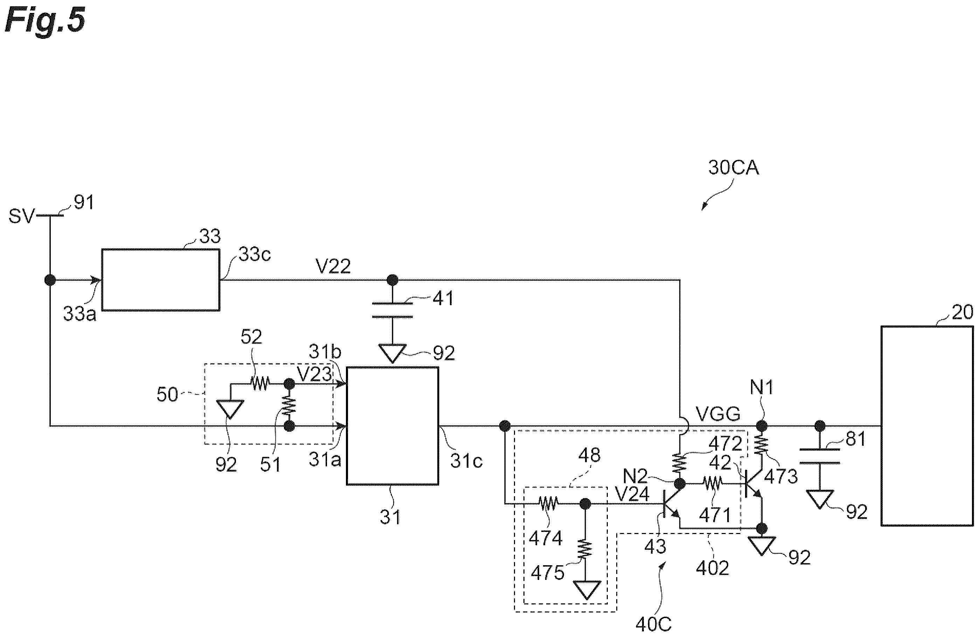

Although the drive power supply units 30B and 30C in the first embodiment have two voltage conversion portions (first voltage conversion portion 31 and second voltage conversion portion 32), the drive power supply units 30B and 30C may have only one voltage conversion portion (first voltage conversion portion 31). FIG. 5 is a diagram showing the circuit configuration of a drive power supply unit 30CA having such a configuration as a modification of the drive power supply unit 30C. In the drive power supply unit 30CA, the first voltage conversion portion 31 includes, for example, a switching regulator, and converts the power supply voltage SV into the driving direct-current voltage VGG with high efficiency.

The drive power supply unit 30CA has a discharge circuit 40C instead of the discharge circuit 40A in the first embodiment. The discharge circuit 40C in the present modification is different from the discharge circuit 40A in the first embodiment in the following respects, but is the same as the discharge circuit 40A in other respects. The discharge circuit 40C in the present modification has a first circuit portion 402 instead of the first circuit portion 401 in the first embodiment. The first circuit portion 402 is configured to apply a voltage based on the voltage across the capacitive element 41 to the control terminal of the second switch element 42 after the stopping operation of the first voltage conversion portion 31 is started. The first circuit portion 402 is configured not to apply a voltage based on the voltage across the capacitive element 41 to the control terminal of the second switch element 42 while the first voltage conversion portion 31 is operating, that is, before start of the stopping operation of the first voltage conversion portion 31.

Specifically, the control terminal of the third switch element 43 is connected to the voltage output terminal 31c of the first voltage conversion portion 31 through the resistor 474. Then, while the power supply voltage SV is being supplied, a voltage based on the driving direct-current voltage VGG is applied to the control terminal of the third switch element 43. The voltage based on the driving direct-current voltage VGG also includes the driving direct-current voltage VGG itself.

The first circuit portion 402 in the present modification may further have a resistor 475. The resistor 475 is interposed between the reference potential line 92 and a node between the control terminal of the third switch element 43 and the resistor 474. In this case, the third switch element 43 is driven by a voltage V24 obtained by dividing the driving direct-current voltage VGG. The magnitude of the voltage V24 is determined by the ratio of the resistor 474 to the resistor 475. The resistor 474 and the resistor 475 form a voltage divider circuit 48.

While the first voltage conversion portion 31 is operating, the third switch element 43 is driven by a voltage based on the driving direct-current voltage VGG (which may be the driving direct-current voltage VGG itself), so that one end and the other end of the third switch element 43 become a conductive state. As a result, the potential of the second node N2 approaches the potential of the reference potential line 92, and the voltage based on the voltage across the capacitive element 41 is not applied to the control terminal of the second switch element 42.

On the other hand, when the stopping operation of the first voltage conversion portion 31 starts, the driving direct-current voltage VGG drops and the third switch element 43 is no longer driven, so that one end and the other end of the third switch element 43 become non-conductive state. At this time, the second direct-current voltage V22 also drops, so that the potential of the second node N2 approaches the potential of the voltage across the capacitive element 41. Therefore, the voltage based on the voltage across the capacitive element 41 (which may be the voltage across the capacitive element 41 itself) is applied to the control terminal of the second switch element 42. Therefore, the second switch element 42 is driven by the voltage across the capacitive element 41 after the stopping operation of the first voltage conversion portion 31 is started.

In the drive power supply unit 30CA according to the present modification, while the power supply voltage SV is being supplied from the power supply line 91, the driving direct-current voltage VGG is output from the first voltage conversion portion 31, and the driving direct-current voltage VGG is supplied to the level shifter 21 of the gate driver 20 (see FIG. 1). During that time, the capacitive element 41 is charged by the second direct-current voltage V22 (or alternatively the power supply voltage SV). At this time, as described above, in the first circuit portion 402, the third switch element 43 is driven by the voltage V24 based on the driving direct-current voltage VGG, so that the potential of the second node N2 approaches the potential of the reference potential line 92 and the second switch element 42 is not driven.

Thereafter, when the power supply voltage SV is turned off due to, for example, the end of the operation of the imaging device 1, the stopping operations of the first voltage conversion portion 31 and the third voltage conversion portion 33 are started, and the driving direct-current voltage VGG and the second direct-current voltage V22 drop. At this time, as described above, in the first circuit portion 402, the third switch element 43 is not driven, so that the potential of the second node N2 approaches the potential determined by the voltage across the capacitive element 41. Therefore, the second switch element 42 is driven by the voltage across the capacitive element 41. The subsequent operations are similar to those in the first embodiment.

In the present modification as well, similar to the first embodiment, it is possible to arbitrarily set the timing at which the driving direct-current voltage VGG turns off, such as advancing the timing at which the driving direct-current voltage VGG turns off in a specific drive power supply unit 30CA.

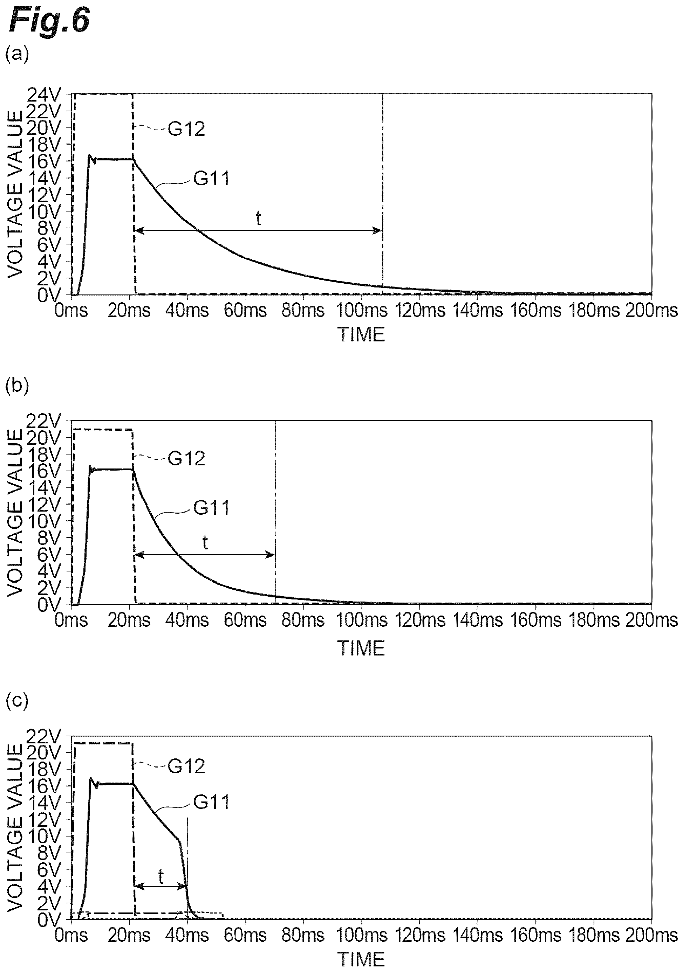

(a), (b), and (c) in FIG. 6 are graphs showing a time waveform G11 of the driving direct-current voltage VGG and a time waveform G12 of the power supply voltage SV. (a) in FIG. 6 shows, as a reference example, a case where a drive power supply unit does not have a discharge circuit. (b) in FIG. 6 shows a case where the drive power supply unit 30CA according to the second modification does not have the resistor 475. (c) in FIG. 6 shows a case where the drive power supply unit 30CA according to the second modification has the resistor 475. In (a), (b), and (c) in FIG. 6, the vertical axis indicates voltage value and the horizontal axis indicates time.

Referring to (a) in FIG. 6, in a drive power supply unit that does not have a discharge circuit, the time t from when the power supply voltage SV is turned off until the driving direct-current voltage VGG drops to 1 V or less is relatively long at approximately 85 ms. In contrast, referring to (b) in FIG. 6, the time t in the drive power supply unit 30CA that does not have the resistor 475 is approximately 50 ms, which is significantly shorter than that in the drive power supply unit that does not have a discharge circuit. Referring to (c) in FIG. 6, the time t in the drive power supply unit 30CA having the resistor 475 is about 19 ms, which is further shortened compared to the drive power supply unit 30CA not having the resistor 475.

As described above, according to the drive power supply unit 30CA according to the second modification, it is possible to effectively shorten the time t from when the power supply voltage SV is turned off until the driving direct-current voltage VGG turns off.

### [Second embodiment]

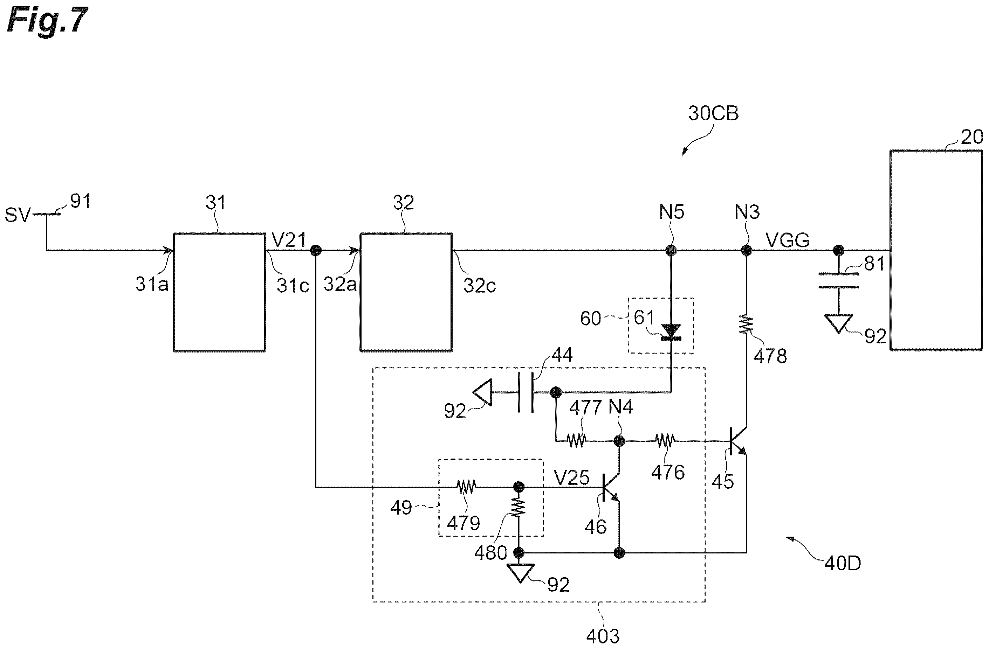

FIG. 7 is a diagram showing the circuit configuration of a drive power supply unit 30CB according to the second embodiment. The configuration of an imaging device according to the present embodiment is the same as that of the imaging device 1 according to the first embodiment, except that the drive power supply unit 30CB is provided instead of the drive power supply unit 30C.

The drive power supply unit 30CB does not have the third voltage conversion portion 33, unlike the drive power supply unit 30C in the first embodiment. The drive power supply unit 30CB has a discharge circuit 40D instead of the discharge circuit 40A in the first embodiment.

The discharge circuit 40D is provided to discharge the charges accumulated in the bypass capacitor 81 and the like to the reference potential line 92 when the driving direct-current voltage VGG is turned off due to, for example, the end of the operation of the imaging device 1. Since the drive power supply unit 30CB has the discharge circuit 40D, when the power supply voltage SV is turned off, for example, when the imaging device 1 ends its operation, the driving direct-current voltage VGG turns off earlier than the driving direct-current voltages VCC and VEE. The discharge circuit 40D in the present embodiment has a capacitive element 44, a second switch element 45, a resistor 478, and a first circuit portion 403.

The capacitive element 44 is configured to be charged by the power supply voltage SV or another voltage whose voltage value is converted from the power supply voltage SV. In one example, the capacitive element 44 is configured to be charged by the driving direct-current voltage VGG output from the second voltage conversion portion 32. Specifically, one electrode of the capacitive element 44 is connected to a third node N5 between the voltage output terminal 32c of the second voltage conversion portion 32 and the gate driver 20. The other electrode of the capacitive element 44 is connected to the reference potential line 92. The capacitance value of the capacitive element 44 is in the range of 10 µF to 150 µF, for example. The type of the capacitive element 44 is, for example, a tantalum capacitor. When the capacitive element 44 is charged by the power supply voltage SV, one electrode of the capacitive element 44 is connected to the power supply line 91. Alternatively, the capacitive element 44 may be configured to be charged by the first direct-current voltage V21 output from the first voltage conversion portion 31. In this case, one electrode of the capacitive element 44 is connected to a node between the voltage output terminal 31c of the first voltage conversion portion 31 and the voltage input terminal 32a of the second voltage conversion portion 32.

The second switch element 45 is, for example, a transistor. In the shown example, the second switch element 45 is an NPN transistor. One end of the second switch element 45 (one current terminal when the second switch element 45 is a transistor) is connected to a first node N3 between the second voltage conversion portion 32 and the gate driver 20 through the resistor 478. The other end of the second switch element 45 (the other current terminal when the second switch element 45 is a transistor) is connected to the reference potential line 92. The control terminal of the second switch element 45 is connected to the voltage output terminal 32c of the second voltage conversion portion 32 through resistors 476 and 477. The resistors 476 and 477 are connected in series with each other between the control terminal of the second switch element 45 and the voltage output terminal 32c of the second voltage conversion portion 32.

The first circuit portion 403 is configured to apply a voltage based on the voltage across the capacitive element 44 to the control terminal of the second switch element 45 after the stopping operation of the first voltage conversion portion 31 is started. The voltage based on the voltage across the capacitive element 44 also includes the voltage across the capacitive element 44 itself. The first circuit portion 403 is configured not to apply a voltage based on the voltage across the capacitive element 44 to the control terminal of the second switch element 45 while the first voltage conversion portion 31 is operating, that is, before start of the stopping operation of the first voltage conversion portion 31.

Specifically, the first circuit portion 403 includes a third switch element 46 and resistors 476, 477, 479, and 480. The third switch element 46 is, for example, a transistor. In the shown example, the third switch element 46 is an NPN transistor. One end of the third switch element 46 (one current terminal when the third switch element 46 is a transistor) is connected to a second node N4 between one electrode of the capacitive element 44 and the control terminal of the second switch element 45 (for example, between the resistors 476 and 477). When the second node N4 is a node between the resistor 476 and the resistor 477, the resistor 476 is interposed between the second node N4 and the control terminal of the second switch element 45. The other end of the third switch element 46 (the other current terminal when the third switch element 46 is a transistor) is connected to the reference potential line 92.

The control terminal of the third switch element 46 is connected to the voltage output terminal 31c of the first voltage conversion portion 31 through the resistor 479. The resistor 480 is interposed between the reference potential line 92 and a node between the control terminal of the third switch element 46 and the resistor 479. Therefore, the third switch element 46 is driven by a voltage V25 obtained by dividing the first direct-current voltage V21. The magnitude of the voltage V25 is determined by the ratio of the resistor 479 to the resistor 480. The magnitude of the voltage V25 is set so that the third switch element 46 is turned on after the first direct-current voltage V21 has risen sufficiently. The resistor 479 and the resistor 480 form a voltage divider circuit 49.

While the first voltage conversion portion 31 is operating, the third switch element 46 is driven by the voltage V25 based on the first direct-current voltage V21, so that one end and the other end of the third switch element 46 become a conductive state. Therefore, the potential of the second node N4 approaches the potential of the reference potential line 92, and the voltage based on the voltage across the capacitive element 44 is not applied to the control terminal of the second switch element 45.

On the other hand, when the first direct-current voltage V21 drops, the third switch element 46 is no longer driven, so that one end and the other end of the third switch element 46 become a non-conductive state. Immediately thereafter, the driving direct-current voltage VGG also drops, so that the potential of the second node N4 approaches the potential of the voltage across the capacitive element 44. Therefore, a voltage based on the voltage across the capacitive element 44 (which may be the voltage across the capacitive element 44 itself) is applied to the control terminal of the second switch element 45. Therefore, the second switch element 45 is driven by the voltage across the capacitive element 44 after the stopping operation of the first voltage conversion portion 31 is started.

The discharge circuit 40D further includes a backflow prevention circuit 60. The backflow prevention circuit 60 is interposed between one electrode of the capacitive element 44 and the third node N5 between the second voltage conversion portion 32 and the gate driver 20. The backflow prevention circuit 60 prevents a backflow of charges from the capacitive element 44 to the third node N5 when a voltage based on the voltage across the capacitive element 44 is applied to the control terminal of the second switch element 45. In one example, the backflow prevention circuit 60 includes a diode 61. The anode of the diode 61 is connected to the third node N5, and the cathode of the diode 61 is connected to one electrode of the capacitive element 44.

The operation and effects of the imaging device including the drive power supply unit 30CB having the above configuration will be described. In the drive power supply unit 30CB, while the power supply voltage SV is being supplied from the power supply line 91, the first direct-current voltage V21 is output from the first voltage conversion portion 31, the driving direct-current voltage VGG is output from the second voltage conversion portion 32, and the driving direct-current voltage VGG is supplied to the level shifter 21 of the gate driver 20 (see FIG. 1). During that time, the capacitive element 44 is charged by the driving direct-current voltage VGG. At this time, as described above, in the first circuit portion 403, since the third switch element 46 is driven by a voltage based on the first direct-current voltage V21, the potential of the second node N4 approaches the potential of the reference potential line 92 and the second switch element 45 is not driven.

Thereafter, when the power supply voltage SV is turned off due to, for example, the end of the operation of the imaging device, the stopping operation of the first voltage conversion portion 31 is started, and the first direct-current voltage V21 drops. Then, as the first direct-current voltage V21 decreases, the stopping operation of the second voltage conversion portion 32 starts. At this time, as described above, in the first circuit portion 403, the third switch element 46 is not driven, so that the potential of the second node N4 approaches the potential determined by the voltage across the capacitive element 44. Therefore, the second switch element 45 is driven by the voltage across the capacitive element 44.

When the second switch element 45 is driven, the first node N3 of the wiring that supplies the driving direct-current voltage VGG to the gate driver 20 is connected to the reference potential line 92 through the second switch element 45. At this time, charges accumulated on the wiring supplying the driving direct-current voltage VGG to the gate driver 20, such as charges accumulated in the bypass capacitor 81 and the circuit elements of the gate driver 20, escape to the reference potential line 92. Therefore, in the drive power supply unit 30CB having the discharge circuit 40D, the timing at which the driving direct-current voltage turns off is earlier than that in the other drive power supply units 30A and 30B not having the discharge circuit 40D. Therefore, according to the imaging device according to the present embodiment, it is possible to arbitrarily set the timing at which the driving direct-current voltage VGG turns off, such as advancing the timing at which the driving direct-current voltage VGG turns off in a specific drive power supply unit 30CB.

As described above, the discharge circuit 40D may include the first circuit portion 403. The first circuit portion 403 applies a voltage based on the voltage across the capacitive element 44 to the control terminal of the second switch element 45 after the stopping operation of the first voltage conversion portion 31 is started. The first circuit portion 403 does not apply the voltage based on the voltage across the capacitive element 44 to the control terminal of the second switch element 45 while the first voltage conversion portion 31 is operating, that is, before start of the stopping operation of the first voltage conversion portion 31. By including such a first circuit portion 403 in the discharge circuit 40D, it is possible to automatically drive the second switch element 45 when the stopping operation of the first voltage conversion portion 31 is started.

As described above, the discharge circuit 40D may further include the third switch element 46 and the resistor 476. One end of the third switch element 46 is connected to the second node N4 between the capacitive element 44 and the control terminal of the second switch element 45. The other end of the third switch element 46 is connected to the reference potential line 92. The third switch element 46 is driven by a voltage based on the first direct-current voltage V21, that is, the voltage V25 obtained by dividing the first direct-current voltage V21. The resistor 476 is interposed between the second node N4 and the control terminal of the second switch element 45. By including such a third switch element 46 and resistor 476 in the discharge circuit 40D, it is possible to automatically drive the second switch element 45 when the stopping operation of the first voltage conversion portion 31 is started. In addition, since the third switch element 46 is driven by the voltage V25 obtained by dividing the first direct-current voltage V21, it is possible to make the timing at which the third switch element 46 is turned off earlier when the first direct-current voltage V21 drops, and accordingly, it is possible to make the driving start timing of the second switch element 45 earlier.

As in the present embodiment, the discharge circuit 40D may further include the backflow prevention circuit 60 that is interposed between the third node N5, which is between the second voltage conversion portion 32 and the gate driver 20, and the capacitive element 44 to prevent backflow of charges from the capacitive element 44 to the third node N5. In this case, the voltage across the capacitive element 44 can be maintained for a time sufficient for the driving direct-current voltage VGG to turn off.

As in the present embodiment, the capacitive element 44 may be charged by the driving direct-current voltage VGG. In this case, since there is no need to provide a separate voltage conversion portion for generating a voltage for charging the capacitive element 44, the circuit scale can be reduced.

In the present embodiment as well, when the power supply voltage SV is turned off, the driving direct-current voltage VGG of the drive power supply unit 30CB may turn off earlier than the driving direct-current voltages VCC and VEE of the other drive power supply units 30A and 30B. Therefore, it is possible to easily set the sequence in which the driving direct-current voltage VGG turns off relative to the driving direct-current voltages VCC and VEE. As in the present embodiment, when the power supply voltage SV is turned off, the driving direct-current voltage VGG of the drive power supply unit 30CB may turn off earlier than the driving direct-current voltages VCC and VEE having voltages equal to or lower than the driving direct-current voltage VGG.

In the present embodiment as well, at least one of the drive power supply units 30A, 30B, and 30CB (drive power supply units 30A and 30B in the present embodiment) may not have the discharge circuit 40D. A drive power supply unit for which the timing at which the driving direct-current voltage turns off may be delayed can have a simplified circuit configuration by not having the discharge circuit 40D.

Similar to the first embodiment, the first voltage conversion portion 31 may have an enable terminal for controlling ON/OFF of the operation of the first voltage conversion portion 31, in addition to the voltage input terminal 31a for inputting the power supply voltage SV. Then, a control voltage obtained by dividing the power supply voltage SV may be input to the enable terminal. In this case, when the power supply voltage SV is turned off, the stopping operation of the first voltage conversion portion 31 can be started earlier, and accordingly, the first direct-current voltage V21 can be reduced earlier. As a result, the timing at which the driving direct-current voltage VGG turns off can be made earlier.

### [Third modification]

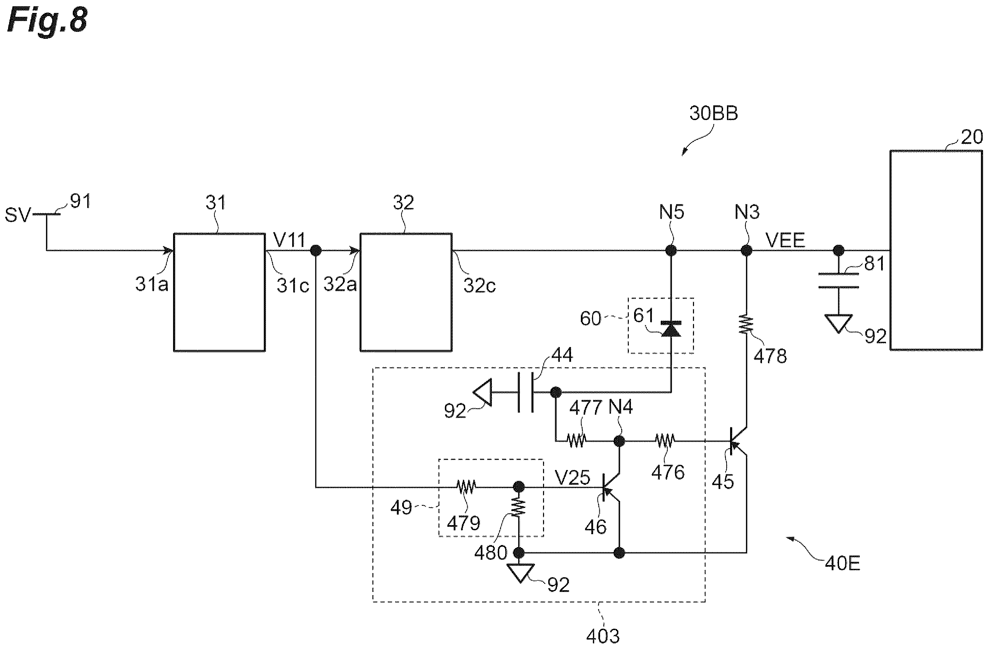

In the second embodiment, only the drive power supply unit 30CB has the discharge circuit 40D, but the drive power supply unit 30B may also have a discharge circuit. FIG. 8 is a diagram showing the circuit configuration of a drive power supply unit 30BB having a discharge circuit, as a modification of the drive power supply unit 30B. The drive power supply unit 30BB has a discharge circuit 40E.

The driving direct-current voltage VEE output from the drive power supply unit 30BB is a negative voltage (for example, -10 V). In the present modification, the capacitive element 41 is charged by the driving direct-current voltage VEE. Therefore, the direction of the diode 61 in the backflow prevention circuit 60 is opposite to that in the second embodiment. That is, the anode of the diode 61 is connected to one electrode of the capacitive element 44, and the cathode of the diode 61 is connected to the third node N5.

In the discharge circuit 40E, when the second switch element 45 and the third switch element 46 are transistors, these transistors are PNP transistors, unlike the discharge circuit 40D of the drive power supply unit 30CB, because the first direct-current voltage V11 and the driving direct-current voltage VEE are negative voltages. Except for the type of transistor, the configuration of the discharge circuit 40E is the same as the configuration of the discharge circuit 40D.

In the second embodiment, only one (drive power supply unit 30CB) of the plurality of drive power supply units has the discharge circuit 40D. As in the present modification, at least two (for example, the drive power supply units 30BB and 30CB) of the plurality of drive power supply units may have a discharge circuit. In this case, since the timing at which the driving direct-current voltage turns off in at least two drive power supply units is made earlier, the timing at which at least two driving direct-current voltages (for example, the driving direct-current voltages VEE and VGG) turn off can be easily set.

### [Fourth modification]

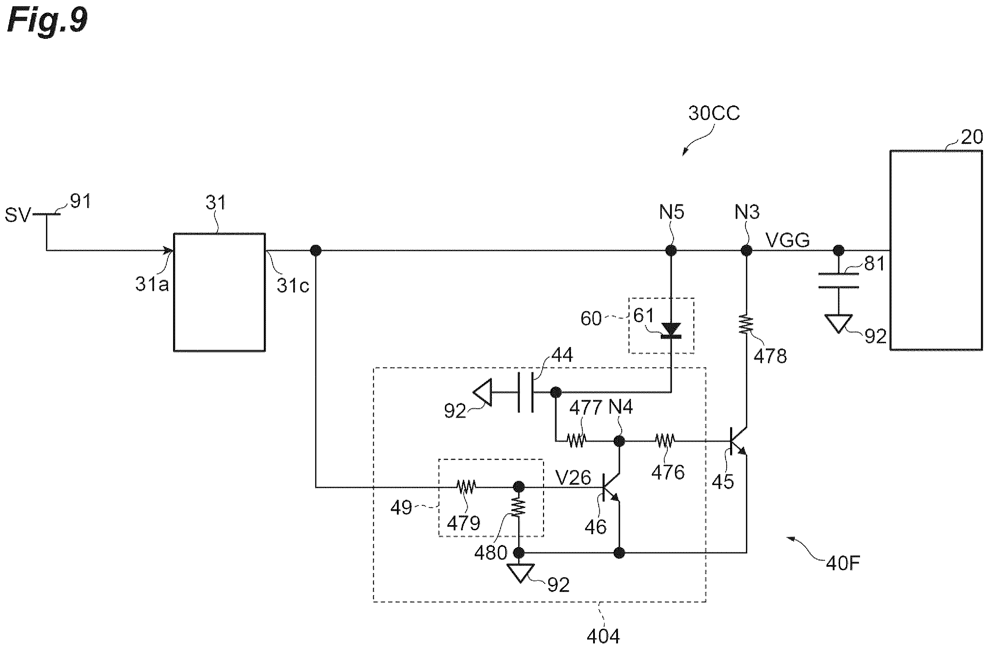

Although the drive power supply units 30CB and 30BB shown in FIGS. 7 and 8 have two voltage conversion portions (first voltage conversion portion 31 and second voltage conversion portion 32), the drive power supply units 30CB and 30BB may have only one voltage conversion portion (first voltage conversion portion 31). FIG. 9 is a diagram showing the circuit configuration of a drive power supply unit 30CC having such a configuration as a modification of the drive power supply unit 30CB. In the drive power supply unit 30CC, the first voltage conversion portion 31 includes, for example, a switching regulator, and converts the power supply voltage SV into the driving direct-current voltage VGG with high efficiency.

The drive power supply unit 30CC has a discharge circuit 40F instead of the discharge circuit 40D in the second embodiment. The discharge circuit 40F in the present modification is different from the discharge circuit 40D in the second embodiment in the following respects, but is the same as the discharge circuit 40D in other respects. The discharge circuit 40F in the present modification has a first circuit portion 404 instead of the first circuit portion 403 in the second embodiment. The first circuit portion 404 is configured to apply a voltage based on the voltage across the capacitive element 44 to the control terminal of the second switch element 45 after the stopping operation of the first voltage conversion portion 31 is started. The first circuit portion 404 is configured not to apply a voltage based on the voltage across the capacitive element 44 to the control terminal of the second switch element 45 while the first voltage conversion portion 31 is operating, that is, before start of the stopping operation of the first voltage conversion portion 31.

Specifically, the control terminal of the third switch element 46 is connected to the voltage output terminal 31c of the first voltage conversion portion 31 through the resistor 479. Then, while the power supply voltage SV is being supplied, a voltage V26 obtained by dividing the driving direct-current voltage VGG by the voltage divider circuit 49 is applied to the control terminal of the third switch element 46.

While the first voltage conversion portion 31 is operating, the third switch element 46 is driven by the voltage V26 based on the driving direct-current voltage VGG, so that one end and the other end of the third switch element 46 become a conductive state. As a result, the potential of the second node N4 approaches the potential of the reference potential line 92, and the voltage based on the voltage across the capacitive element 44 is not applied to the control terminal of the second switch element 45.

On the other hand, when the stopping operation of the first voltage conversion portion 31 starts, the driving direct-current voltage VGG drops and the third switch element 46 is no longer driven, so that one end and the other end of the third switch element 46 become non-conductive state. At this time, the potential of the second node N4 approaches the potential of the voltage across the capacitive element 44. Therefore, the voltage based on the voltage across the capacitive element 44 (which may be the voltage across the capacitive element 44 itself) is applied to the control terminal of the second switch element 45. Therefore, the second switch element 45 is driven by the voltage across the capacitive element 44 after the stopping operation of the first voltage conversion portion 31 is started.

In the drive power supply unit 30CC according to the present modification, while the power supply voltage SV is being supplied from the power supply line 91, the driving direct-current voltage VGG is output from the first voltage conversion portion 31, and the driving direct-current voltage VGG is supplied to the level shifter 21 of the gate driver 20 (see FIG. 1). During that time, the capacitive element 44 is charged by the driving direct-current voltage VGG. At this time, as described above, in the first circuit portion 404, the third switch element 46 is driven by the voltage V26 based on the driving direct-current voltage VGG, so that the potential of the second node N4 approaches the potential of the reference potential line 92 and the second switch element 45 is not driven.

Thereafter, when the power supply voltage SV is turned off due to, for example, the end of the operation of the imaging device 1, the stopping operation of the first voltage conversion portion 31 is started, and the driving direct-current voltage VGG drops. At this time, as described above, in the first circuit portion 404, the third switch element 46 is not driven, so that the potential of the second node N4 approaches the potential determined by the voltage across the capacitive element 44. Therefore, the second switch element 45 is driven by the voltage across the capacitive element 44. The subsequent operations are similar to those in the second embodiment.

In the present modification as well, as in the second embodiment, it is possible to arbitrarily set the timing at which the driving direct-current voltage VGG turns off, such as advancing the timing at which the driving direct-current voltage VGG turns off in a specific drive power supply unit 30CC.

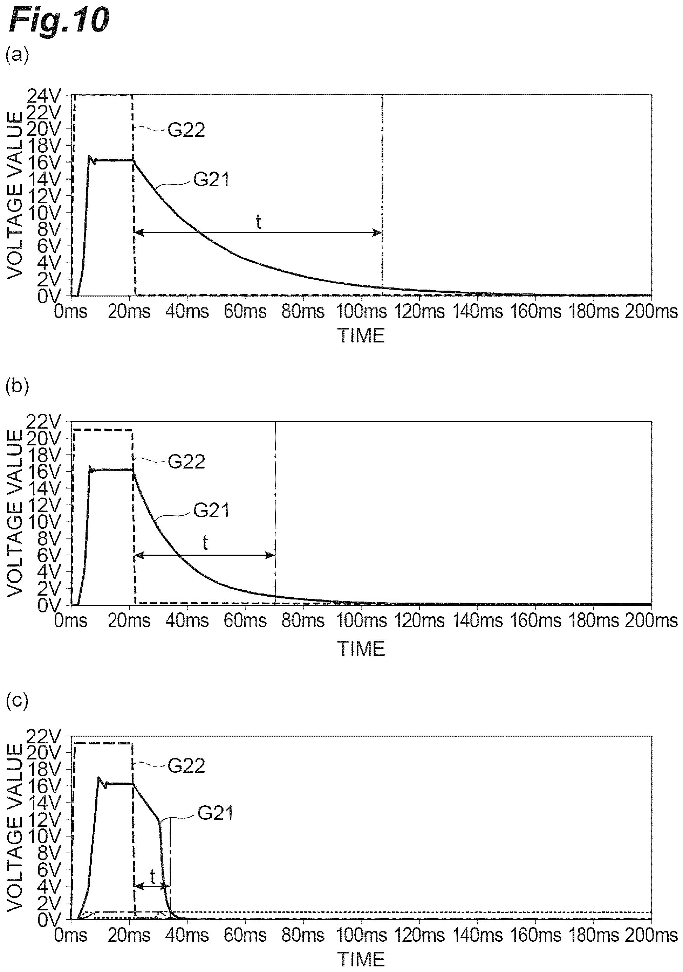

(a), (b), and (c) in FIG. 10 are graphs showing a time waveform G21 of the driving direct-current voltage VGG and a time waveform G22 of the power supply voltage SV. (a) in FIG. 10 shows, as a reference example, a case where a drive power supply unit does not have a discharge circuit. (b) in FIG. 10 shows a case where the drive power supply unit 30CC according to the fourth modification does not have the resistor 480 (that is, the control terminal of the third switch element 46 is not connected to the reference potential line 92, but is connected only to the voltage output terminal 31c of the first voltage conversion portion 31 through the resistor 479). (c) in FIG. 10 shows a case of the drive power supply unit 30CC according to the fourth modification. In (a), (b), and (c) in FIG. 10, the vertical axis indicates voltage value and the horizontal axis indicates time.

Referring to (a) in FIG. 10, in a drive power supply unit that does not have a discharge circuit, the time t from when the power supply voltage SV is turned off until the driving direct-current voltage VGG drops to 1 V or less is relatively long at approximately 85 ms. In contrast, referring to (b) in FIG. 10, the time t when the drive power supply unit 30CC does not have the resistor 480 is approximately 50 ms, which is significantly shorter than that in the drive power supply unit that does not have a discharge circuit. Referring to (c) in FIG. 10, the time t in the drive power supply unit 30CC having the resistor 480 is about 11 ms, which is further shortened compared to the case where the drive power supply unit 30CC does not have the resistor 480.

As described above, according to the drive power supply unit 30CC according to the fourth modification, it is possible to effectively shorten the time t from when the power supply voltage SV is turned off until the driving direct-current voltage VGG turns off.

The imaging device according to the present disclosure is not limited to the embodiments described above, and various modifications can be made. For example, although transistors are exemplified as the second switch element 42 (45) and the third switch element 43 (46) in each of the above embodiments and modifications, the second switch element 42 (45) and the third switch element 43 (46) may be other switch elements except for transistors. In each of the above embodiments, a case has been exemplified in which the imaging device includes three drive power supply units, that is, the drive power supply unit 30A, the drive power supply unit 30B (30BB), and the drive power supply unit 30C (30CA, 30CB, or 30CC). The number of drive power supply units provided in the imaging device is not limited thereto. The imaging device may include two drive power supply units, or may include four or more drive power supply units. Then, at least one drive power supply unit may have a discharge circuit.

The discharge circuit in each of the above embodiments and modifications has a first circuit portion. The first circuit portion applies a voltage based on the voltage across the capacitive element to the control terminal of the second switch element after the stopping operation of the first voltage conversion portion is started, and does not apply the voltage based on the voltage across the capacitive element to the control terminal of the second switch element while the first voltage conversion portion is operating, that is, before start of the stopping operation of the first voltage conversion portion 31. The specific circuit configuration of such a first circuit portion is not limited to those shown in FIGS. 3 to 5 and 7 to 9. The first circuit portion can have various other circuit configurations capable of performing the above functions.

In each of the above embodiments and modifications, a linear regulator is exemplified as the second voltage conversion portion 32, but the second voltage conversion portion 32 may be a passive element such as a resistive element having the voltage input terminal 32a as one end and the voltage output terminal 32c as the other end.

In each of the above embodiments and modifications, the gate driver 20 is exemplified as a driving circuit to which a plurality of driving direct-current voltages are supplied. The driving circuit to which a plurality of driving direct-current voltages are supplied is not limited thereto, and may be another circuit such as the readout circuit 14, for example. The readout circuit 14 can also be supplied with a plurality of driving direct-current voltages from a plurality of drive power supply units having a configuration similar to that of the drive power supply unit 30C (30CA, 30CB, or 30CC). Note that the magnitude of the driving direct-current voltage is different from that of the gate driver 20. The magnitude of the driving direct-current voltage supplied to the readout circuit 14 is, for example, 2.5 V and 5 V.

### Reference Signs List

1: imaging device, 10: pixel, 11: light receiving region, 12: first switch element, 13: charge readout wiring, 14: readout circuit, 15: gate wiring, 20: gate driver, 21: level shifter, 22: shift register, 30A, 30B, 30BB, 30C, 30CA, 30CB, 30CC: drive power supply unit, 31: first voltage conversion portion, 31a, 32a, 33a: voltage input terminal, 31b, 32b: enable terminal, 31c, 32c, 33c: voltage output terminal, 32: second voltage conversion portion, 33: third voltage conversion portion, 35: voltage conversion portion, 40A, 40B, 40C, 40D, 40E, 40F: discharge circuit, 41, 44: capacitive element, 42, 45: second switch element, 43, 46: third switch element, 48, 49, 50: voltage divider circuit, 51, 52: resistor, 60: backflow prevention circuit, 61: diode, 81: bypass capacitor, 91: power supply line, 92: reference potential line, 141: amplifier circuit, 401, 402, 403, 404: first circuit portion, 471 to 480: resistor, G11, G12, G21, G22: time waveform, N1, N3: first node, N2, N4: second node, N5: third node, Sd: drive signal, SV: power supply voltage, t: time, V11, V21: first direct-current voltage, V12, V22: second direct-current voltage, V23: control voltage, V24, V25, V26: voltage, VCC, VEE, VGG: driving direct-current voltage, Vd: drive voltage.

## Claims

1. An imaging device, comprising:
a plurality of pixels each having a light receiving region for converting incident light or radiation into an electrical signal;
a power supply line for supplying a power supply voltage;
a plurality of drive power supply units that convert the power supply voltage into a driving direct-current voltage and are connected in parallel to each other with respect to the power supply line; and
a driving circuit that is supplied with the driving direct-current voltage from each of the plurality of drive power supply units and reads out the electrical signal from the light receiving region of each of the plurality of pixels,
wherein a magnitude of the driving direct-current voltage differs for each of the plurality of drive power supply units,
at least one power supply unit of the plurality of drive power supply units includes:
a first voltage conversion portion for converting the power supply voltage into a first direct-current voltage;
a second voltage conversion portion for converting the first direct-current voltage into the driving direct-current voltage; and
a discharge circuit,
the discharge circuit includes:
a capacitive element that is charged by the power supply voltage or another voltage whose voltage value is converted from the power supply voltage; and
a second switch element that is driven by a voltage across the capacitive element after a stopping operation of the first voltage conversion portion is started and has one end connected to a first node between the second voltage conversion portion and the driving circuit and another end connected to a constant potential line.

2. The imaging device according to claim 1,
wherein the first voltage conversion portion includes a switching regulator, and
the second voltage conversion portion includes a linear regulator.

3. The imaging device according to claim 1 or 2,
wherein the discharge circuit includes a first circuit portion that applies a voltage based on the voltage across the capacitive element to a control terminal of the second switch element after the stopping operation of the first voltage conversion portion is started and does not apply a voltage based on the voltage across the capacitive element to the control terminal of the second switch element before start of the stopping operation of the first voltage conversion portion.

4. The imaging device according to any one of claims 1 to 3,
wherein the discharge circuit further includes:
a third switch element driven by the first direct-current voltage and having one end connected to a second node between the capacitive element and a control terminal of the second switch element and another end connected to the constant potential line; and
a resistor interposed between the second node and the control terminal of the second switch element.

5. The imaging device according to any one of claims 1 to 4,
wherein the at least one drive power supply unit further includes a third voltage conversion portion, and
the another voltage is a voltage converted from the power supply voltage by the third voltage conversion portion.

6. The imaging device according to any one of claims 1 to 5,
wherein the first voltage conversion portion has an enable terminal for controlling ON/OFF of an operation of the first voltage conversion portion, separately from a terminal for inputting the power supply voltage, and
a voltage obtained by dividing the power supply voltage is input to the enable terminal.

7. The imaging device according to any one of claims 1 to 4,
wherein the another voltage is the driving direct-current voltage.

8. The imaging device according to claim 7,
wherein the discharge circuit further includes a backflow prevention circuit that is interposed between the capacitive element and a third node between the second voltage conversion portion and the driving circuit to prevent a backflow of charges from the capacitive element to the third node.

9. The imaging device according to claim 7,
wherein the discharge circuit further includes:
a third switch element having one end connected to a second node between the capacitive element and a control terminal of the second switch element and another end connected to the constant potential line; and
a resistor interposed between the second node and the control terminal of the second switch element, and
the third switch element is driven by a voltage obtained by dividing the first direct-current voltage.

10. An imaging device, comprising:
a plurality of pixels each having a light receiving region for converting incident light or radiation into an electrical signal;
a power supply line for supplying a power supply voltage;
a plurality of drive power supply units that convert the power supply voltage into a driving direct-current voltage and are connected in parallel to each other with respect to the power supply line; and
a driving circuit that is supplied with the driving direct-current voltage from each of the plurality of drive power supply units and reads out the electrical signal from the light receiving region of each of the plurality of pixels,
wherein a magnitude of the driving direct-current voltage differs for each of the plurality of drive power supply units,
at least one power supply unit of the plurality of drive power supply units includes:
a voltage conversion portion for converting the power supply voltage into the driving direct-current voltage; and
a discharge circuit,
the discharge circuit includes:
a capacitive element that is charged by the power supply voltage or another voltage whose voltage value is converted from the power supply voltage; and
a second switch element that is driven by a voltage across the capacitive element after a stopping operation of the voltage conversion portion is started and has one end connected to a first node between the voltage conversion portion and the driving circuit and another end connected to a constant potential line.

11. The imaging device according to any one of claims 1 to 10,
wherein, when the power supply voltage is turned off, the driving direct-current voltage of the at least one drive power supply unit turns off earlier than the driving direct-current voltages of the other drive power supply units among the plurality of drive power supply units.

12. The imaging device according to any one of claims 1 to 11,
wherein, when the power supply voltage is turned off, the driving direct-current voltage of the at least one drive power supply unit turns off earlier than at least one driving direct-current voltage equal to or lower than the driving direct-current voltage of the at least one drive power supply unit.

13. The imaging device according to any one of claims 1 to 12,
wherein at least two of the plurality of drive power supply units have the discharge circuit.

14. The imaging device according to any one of claims 1 to 13,
wherein at least one power supply unit of the plurality of drive power supply units does not have the discharge circuit.

15. The imaging device according to any one of claims 1 to 14,
wherein each of the plurality of pixels further has a first switch element having one end connected to the light receiving region and another end connected to a charge readout wiring, and
the driving circuit drives the first switch element of each of the plurality of pixels.

16. The imaging device according to claim 15,
wherein the first switch element is a transistor mainly containing IGZO or amorphous silicon, and
the driving circuit drives the first switch element by providing a drive voltage to a control terminal of the transistor.
